# EUROPÄISCHE PATENTANMELDUNG

(11) **EP 3 492 999 A1**
(43) Veröffentlichungstag der Anmeldung: **05.06.2019**
(21) Anmeldenummer: 17204701.1
(22) Anmeldetag: 30.11.2017
(51) Int. Cl.: G05B 9/03, G06F 11/16, G05B 23/02

(54) **VERFAHREN ZUM BETRIEB EINES KOMMUNIKATIONSSYSTEMS, KOMMUNIKATIONSSYSTEM UND KOMMUNIKATIONSTEILNEHMER**

(71) Anmelder: Siemens Aktiengesellschaft, 80333 München (DE)
(72) Erfinder: Drebinger, Andreas, 91074 Herzogenaurach (DE)

(57) **Zusammenfassung**

Während des Betriebs eines Kommunikationssystems (10) für verteilte Anwendungen mit kommunikativ verbundenen Komponenten (A, B, C, D) wird jede Kommunikationsverbindung zwischen den Komponenten (A, B, C, D) durch zwischen den Komponenten (A, B, C, D) periodisch ausgetauschte Lebenszeichentelegramme überwacht. Dabei werden pro Komponente (A) die Statusinformationen von lokalen Fehlerzählern der eigenen Kommunikationsschnittstellen (LS) und der eigenen Kommunikationsschnittstellen zu allen anderen einzelnen Komponenten (LS-X) überprüft. Pro Komponente (A) werden zusätzlich erweiterte Fehlerzähler (ES-X-Y) überwacht, indem die Statusinformationen der lokalen Fehlerzähler (LS-X) der Kommunikationsschnittstellen zu allen anderen einzelnen Komponenten (X) im Hinblick auf alle anderen Komponenten (Y) den erweiterten Fehlerzählern (ES-X-Y) zugewiesen, verteilt und überprüft werden. Ein Komplettausfall einer Komponente eines Kommunikationssystems kann aufgrund der zusätzlich vorhandenen Statusinformationen aller Komponenten mit höherer Sicherheit und frühzeitiger festgestellt werden.

## Beschreibung

Die Erfindung betrifft ein Verfahren zum Betrieb eines Kommunikationssystems gemäß dem Oberbegriff des Anspruchs 1 sowie ein nach dem Verfahren arbeitendes Kommunikationssystem und einen entsprechenden Kommunikationsteilnehmer.

Verteilte Kommunikationssysteme, insbesondere Systeme mit zeitkritischen Aufgaben wie beispielsweise Leittechniksysteme oder Automatisierungssysteme, erfordern einen effizienten und sicheren Mechanismus, um Ausfälle von einzelnen Komponenten oder Ausfälle bzw. Störungen in der Kommunikationsinfrastruktur zu erkennen. Die zu überwachenden Komponenten können hierbei sowohl redundant, z.B. in einer Master-Standby-Konfiguration oder auch singulär ausgelegt sein. Eine aktive Ausfallerkennung, d.h. dass eine Komponente zum Beispiel eines Automatisierungssystems einen internen Fehler selbstständig erkennt und diesen auch noch melden kann, ist nur sehr bedingt möglich, zumal ein Ausfall häufig durch die Unterbrechung einer Kommunikationsverbindung verursacht ist. Der Ausfall einer Komponente kann deshalb meist nur passiv, sprich von anderen, mit der betreffenden Komponente interagierenden Komponenten durch die "nicht mehr Erreichbarkeit" der betroffenen Komponente festgestellt werden.

Zuverlässige Kommunikationssysteme für verteilte Anwendungen, bei denen der Ausfall einer Komponente angezeigt oder gemeldet wird, sind aus dem Stand der Technik bekannt. So ist aus der DE 100 30 329 C1 ein redundantes Steuerungssystem mit zwei Steuerrechnern bekannt, bei dem die beiden Steuerrechner zyklisch wechselnde Lebenszeichen an eine Peripherieeinheit übertragen. Diese überprüft, ob innerhalb einer vorgegebenen Zeitdauer ein Lebenszeichenwechsel aufgetreten ist.

Aus der DE 100 58 390 A1 ist eine Leitsystemarchitektur bekannt, die wie ein Multiserver-Kommunikationssystem ausgelegt ist. Ein als Master-Server definierte Bedien- und Beobachtungsstation unterhält die Verbindung zur Steuerungsebene und versorgt die übrigen Bedien- und Beobachtungsstationen mit aktuellen Leitsystemdaten via Multicast. Bei Ausfall des Masterservers ist jede der anderen Bedien- und Beobachtungsstationen als Master einsetzbar, da sich zuvor alle Kommunikationsteilnehmer gegenseitig durch das Senden von Lebenszeichen überwachen. Fällt eine Station aus, so wird dies von den anderen Stationen sofort bemerkt. Der Ausfall einer Komponente wird allerdings auch hier nur passiv, sprich von anderen, mit der betreffenden Komponente interagierenden Komponenten durch die "nicht mehr Erreichbarkeit" der betroffenen Komponente festgestellt.

Aufgabe der vorliegenden Erfindung ist es daher, ein Verfahren zur verbesserten Erkennung eines Ausfalls einer Komponente eines Kommunikationssystems, wie beispielsweise eines Automatisierungssystems, anzugeben. Darüber hinaus soll ein zur Durchführung des Verfahrens besonders geeignetes Kommunikationssystem und sowie ein geeigneter Kommunikationsteilnehmer angegeben werden.

Die Aufgabe wird durch ein Verfahren gemäß Anspruch 1, ein Kommunikationssystem gemäß Anspruch 5 und einen Kommunikationsteilnehmer gemäß Anspruch 9 gelöst.

Das Verfahren ist insbesondere auch für weit verteilte Systemkonfigurationen mit einer komplexen Netzwerkinfrastruktur geeignet, in denen die verteilten Komponenten über eine oder mehrere physikalische Verbindungen miteinander kommunizieren.

Das Verfahren basiert darauf, dass nicht nur der reine, bidirektionale Empfang von Lebenszeichentelegrammen beteiligter Komponenten für die Ausfallerkennung berücksichtigt wird ("Stand der Technik"), sondern dass der aktuelle Status aller Komponenten über alle verfügbaren Kommunikationsverbindungen verteilt wird. Mit Status sind hier die Statusinformationen gemeint, die Zählerstände in Form von natürlichen Zahlen umfassen. Somit steht jeder Komponente neben der lokalen Sicht auf ein zu überwachendes Objekt (Server, Verbindung) auch die aktuelle Sicht aller anderen Komponenten auf dieses Objekt zur Verfügung, die ebenfalls mit dem betreffenden Objekt in Verbindung stehen.

Hierdurch ergeben sich folgende Vorteile:
- Der Komplettausfall einer Komponente kann aufgrund der zusätzlich vorhandenen Statusinformationen mit höherer Sicherheit festgestellt werden bzw. durch das hierdurch mögliche Herabsetzen der Timeouts (Grenzwerte für die Ausfallzähler), schneller erkannt werden.
- Spezifische Verbindungsausfälle können besser lokalisiert werden, da jeder Komponente die Gesamtsicht aller Komponenten auf das System zur Verfügung steht.
- Ein weiterer Vorteil des Verfahrens ist die höhere Toleranz gegenüber dem Verlust von einzelnen Lebenszeichentelegrammen.

Da für die Übertragung der zusätzlichen Statusinformationen aller Verbindungen keine zusätzlichen Lebenszeichentelegramme erforderlich sind, sondern diese in die bestehenden Lebenszeichentelegramme eingebettet werden können, entsteht keine zusätzliche, nennenswerte Belastung des Gesamtsystems durch die Bereitstellung und Auswertung der erweiterten Statusinformationen.

Im Folgenden wird die Erfindung anhand von in den Figuren dargestellten Ausführungsbeispielen näher beschrieben und erläutert.

Darin zeigen schematisch:
Fig. 1 ein Blockschaltbild eines einfachen Kommunikationssystems zur Durchführung des erfindungsgemäßen Verfahrens der Ausfallerkennung
Fig. 2 Skizze zur Erläuterung der Funktionsweise eines erweiterten Fehlerzählers
Fig. 3 Ausführungsvariante der erfindungsgemäßen Ausfallerkennung bezogen auf die Anordnung aus Fig. 1, bei der Server B ausfällt
Fig. 4 Ausführungsvariante der erfindungsgemäßen Ausfallerkennung bezogen auf die Anordnung aus Fig. 1, bei der die Kommunikationsschnittstelle 2 auf Server B ausfällt
Fig. 5 Ausführungsvariante der erfindungsgemäßen Ausfallerkennung bezogen auf die Anordnung aus Fig. 1, bei der die Kommunikation auf Verbindung 2 zwischen Server A und Server B ausfällt
Fig. 6 Ausführungsvariante der erfindungsgemäßen Ausfallerkennung bezogen auf die Anordnung aus Fig. 1, bei der die Verbindung 2 komplett ausfällt

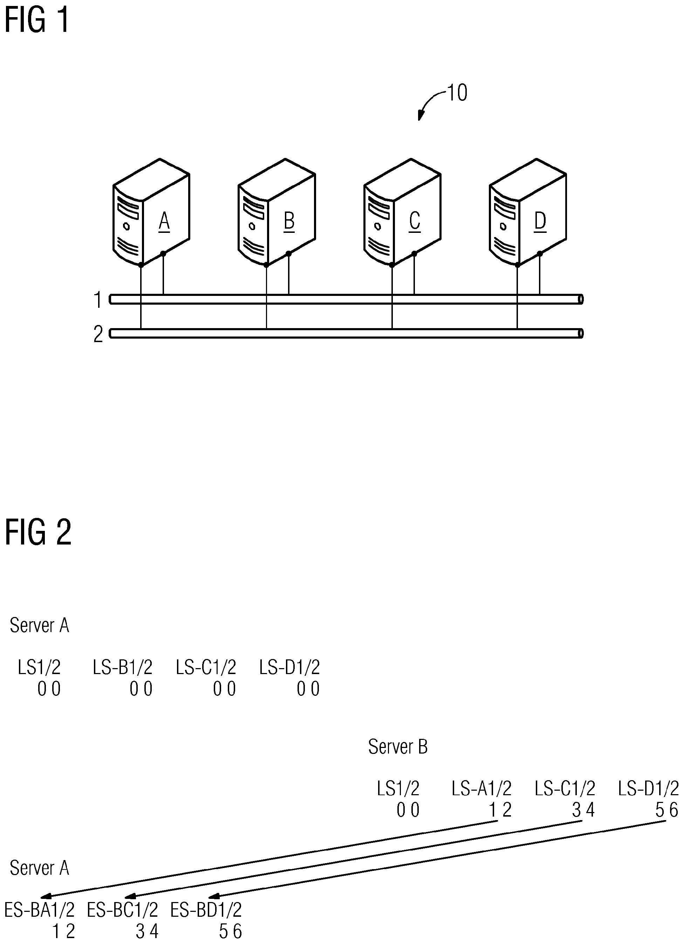

Figur 1 zeigt ein Blockschaltbild eines einfachen Kommunikationssystems zur Durchführung des erfindungsgemäßen Verfahrens. Die beispielhafte Anordnung 10 besteht aus vier Servern A, B, C und D, welche redundant miteinander über die Bussysteme 1 und 2 (auch als Kommunikationsverbindungen bezeichnet) verbunden sind. Figur 1 zeigt dabei lediglich die logische Topologie des beispielhaften Systems. Das gesamte Kommunikationssystem kann hierbei durchaus komplex sein und weitere Router oder sogar Subnetze enthalten.

Zwischen den Komponenten eines Kommunikationssystems 10 wie beispielsweise einem Automatisierungssystem oder einem in Fig. 1 beispielhaft gezeigten Serversystem, werden sogenannte Lebenszeichentelegramme über die Kommunikationsschnittstellen in definierten Zeitintervallen bidirektional ausgetauscht.

Als Kommunikationsschnittstelle ist jede Verbindung von einem Gerät wie hier den Servern zu einem spezifischen Kommunikationsbus (hier 1 und 2) gemeint. Jede Ethernetschnittstelle stellt beispielsweise eine Kommunikationsschnittstelle dar. In Fig.1 ist eine derart ausgestaltete Kommunikationsschnittstelle als Punkt angedeutet.

Im Falle einer ungestörten Kommunikation sendet demnach jeder Server A, B, C und D periodisch ein Lebenszeichentelegramm jeweils über alle Kommunikationsschnittstellen aus und empfängt annähernd gleichzeitig die Lebenszeichentelegramme aller anderen Komponenten. Ein Beispiel für einen hier anwendbaren Kommunikationsmechanismus bilden die Netzwerkprotokolle aus der TCP/IP Protokollfamilie für die Netzkommunikation im Internet (z.B. UDP Multicast). Zur Überwachung der Kommunikation ist in jeder Komponente (hier Server A, B, C und D) ein Überwachungsprogramm installiert. Dieses kann als einzelner Softwarebaustein (stand-alone) oder als eingebetteter Softwarebaustein ausgeführt sein. Das Überwachungsprogramm enthält zumindest einen Zähler (Softwarezähler) pro Kommunikationsschnittstelle, der in Abhängigkeit einer vordefinierten Bedingung inkrementiert wird. Ein Fehlerzähler einer Kommunikationsschnittstelle beispielsweise kann dann inkrementiert werden, wenn an dieser Kommunikationsschnittstelle ein bestimmtes Lebenszeichentelegramm ausbleibt.

Zum besseren Verständnis wird im Folgenden der typische Aufbau eines Lebenszeichentelegramms (beispielhaft an einem System mit zwei Kommunikationsverbindungen) skizziert. Die Start- und Ende-Kennungen dienen lediglich zur Identifikation von gültigen Telegrammen. Mit Server X und Y sind beliebige andere Server des Gesamtsystems (hier bestehend aus Servern A bis D) bezeichnet. In den Lebenszeichentelegrammen können bei Bedarf noch weitere Nutzdaten eingebettet werden, um zusätzliche Daten zwischen den Komponenten transparent auszutauschen. Diese Daten werden vom Überwachungsmechanismus nicht interpretiert oder verarbeitet, sondern lediglich weitergereicht.

### Position:

[0-1] : Startkennung
[2-3] : Datagrammlänge
[4-11] : Sendezeitstempel
[12] : Identifikationsnummer der Kommunikationsverbindung (hier: 1 oder 2)
[13-15] : reserviert
[16-19] : Identifikationsnummer des Servers, der sendet (letzte 4 bytes der IP-Adresse)
[20] : Lokaler Fehlerzähler Kommunikationsschnittstelle 1
[21] : Lokaler Fehlerzähler Kommunikationsschnittstelle 2
[22-23] : Anzahl weiterer Servereinträge
[24-27] : Identifikationsnummer des Servers X
[28] : Lokaler Fehlerzähler Kommunikationsschnittstelle 1
[29] : Lokaler Fehlerzähler Kommunikationsschnittstelle 2
[30-33] : Identifikationsnummer des Servers Y
.... ....
.... : optionale Daten (transparent)
.... ....
[ ] : Endekennung

Um Störungen bei der Kommunikation zwischen den Komponenten festzustellen, enthält das Überwachungsprogramm jedes Servers pro Kommunikationsschnittstelle einen lokalen, eigenen Fehlerzähler. Hierbei kann pro Komponente (hier Server) eine Auswerteeinheit vorgesehen sein, die die Lebenszeichentelegramme ausliest und analysiert und gegebenenfalls eine Warnmeldung oder einen Fehler anzeigt und dies z.B. einer übergeordneten Überwachungseinheit meldet. Hierbei können pro Komponente (hier Server) mindestens zwei eigene Fehlerzähler für jede vorhandene Kommunikationsschnittstelle unterschieden werden:

### Lokaler, eigener Fehlerzähler einer Kommunikationsschnittstelle ("LS"):

In diesem Ausführungsbeispiel wird dieser Zähler immer dann auf Null zurückgesetzt, wenn ein Lebenszeichen einer beliebigen anderen Komponente über die zugehörige Schnittstelle empfangen worden ist.

### Lokaler, eigener Fehlerzähler für jeden Kommunikationspartner X ("LS-X"):

In diesem Ausführungsbeispiel wird dieser Zähler immer dann auf Null zurückgesetzt, wenn ein Lebenszeichen der Komponente X (X E {*A,B,C,D*}) über die zugehörige Kommunikationsschnittstelle (hier Schnittstelle zu Verbindung 1 oder 2) empfangen worden ist.

Wenn also beispielsweise Server A von Server B ein Lebenszeichentelegramm über Verbindung 1 erhalten hat, dann werden auf Server A die Zähler LS1 = 0 und LS-B1 = 0 gesetzt. LS1 wird dann inkrementiert, wenn in einer vorgegebenen Zeitspanne (wie z.B. einem Zyklus eines Automatisierungssystems) überhaupt kein Telegramm (von keinem anderen Server) über die Kommunikationsschnittstelle zu Verbindung 1 angekommen ist. LS-B1 wird nur dann inkrementiert, wenn in der vorgegebenen Zeitspanne kein Telegramm vom zugehörigen Kommunikationspartner, hier also von Server B, über die Kommunikationsschnittstelle zu Verbindung 1 angekommen ist.

Beim Überschreiten vordefinierter Grenzen generiert das Überwachungsprogramm Warn- oder Störmeldungen und/oder informiert andere Softwarekomponenten, die sich für diese Nachricht beim Überwachungsprogramm angemeldet haben. Den Ablauf der konfigurierbaren Wartezeit für den Empfang eines Lebenszeichentelegramms eines Fehlerzählers wird als "Timeout" bezeichnet. Das Zeitintervall für das Senden der Lebenszeichen und die Timeouts, die bei fehlenden Lebenszeichen zum Erhöhen der Fehlerzähler führen, werden systemspezifisch konfiguriert.

Erfindungsgemäß werden nun neben den beiden "lokalen", bereits bekannten Fehlerzählern (hier mit LS bezeichnet), "erweiterte" Fehlerzähler einer Komponente X für die Komponente Y eingeführt: (ES-X-Y)

Diese Fehlerzähler entsprechen den lokalen Fehlerzählern der Kommunikationspartner, deren aktueller Stand mit jedem Lebenszeichentelegramm einer Komponente ebenfalls verteilt wird. Jedes Lebenszeichentelegramm enthält dabei nicht nur die jeweiligen lokalen Fehlerzähler, die der Kommunikationsschnittstelle entsprechen, über welche das jeweilige Telegramm versendet wird (Server-ID des Senders), sondern enthält auch die lokalen Fehlerzähler aller anderen Kommunikationsverbindungen.

Anhand von Fig. 2 wird die Funktionsweise des erweiterten Fehlerzählers ES deutlich. Server A weist hier die lokalen Zählerstände LS für die Kommunikationsschnittstellen zu den Verbindungen 1 und 2 von Null auf (LS1/2 = 0). Ferner sind ebenso die Zählerstände der lokalen Fehlerzähler LS-B1/2, LS-C1/2 und LS-D1/2 mit Null belegt, solange ein Lebenszeichen über die Kommunikationsschnittstellen 1 und 2 von Server A von den Servern B, C und D empfangen wird. Server B weist in diesem Ausführungsbeispiel ebenfalls die lokalen Zählerstände LS für die Kommunikationsschnittstellen zu den Verbindungen 1 und 2 von Null auf (LS1/2 = 0). Der lokale Zähler der Kommunikationsschnittstelle zum Server A über die Verbindung 1 besitzt hingegen einen Zählerstand von 1 (LS-A1 = 1) und der lokale Zähler der Kommunikationsschnittstelle zum Server A über die Verbindung 2 besitzt einen Zählerstand von 2 (LS-A2 = 2). Der lokale Zähler der Kommunikationsschnittstelle zum Server C über die Verbindung 1 besitzt einen Zählerstand von 3 (LS-C1 = 3) usw. Server B sendet die Zählerstände seiner lokalen Zähler in einem Lebenszeichentelegramm zu allen anderen Servern, also auch zu A. Server A weist die Zählerstände aus dem Lebenszeichentelegramm den erweiterten oder "entfernten" Zählern bei sich zu. Der erweiterte Fehlerzähler der Komponente X (hier Server B) für die Kommunikationsschnittstelle zum Server A über die Verbindung 1 entspricht somit ES-BA1 und erhält den Wert 1. Der erweiterte Fehlerzähler von Server B beispielsweise für die Kommunikationsschnittstelle zum Server D über die Verbindung 2 entspricht somit ES-BD2 und erhält den Wert 6. Demnach verfügt nun erfindungsgemäß auch der Server A über alle Werte der lokalen Zähler aller anderen Server und ihrer Kommunikationsschnittstellen. Durch das kontinuierliche Verteilen der Lebenszeichentelegramme verfügen durch die Einführung weiterer Zählervariablen (wie hier der erweiterten oder entfernen Zähler) alle Komponenten auch über die lokalen Statusinformationen aller anderen Komponenten.

Das bedeutet, dass beispielsweise bei Vorhandensein von 2 Kommunikationsverbindungen 1 und 2 (vgl. Fig. 1) die Werte der Fehlerzähler bezüglich Verbindung 1 sowohl über Verbindung 1 als auch über Verbindung 2 verteilt werden. Damit wird der optimale Informationsaustausch aller vorhandenen Statusinformationen erreicht. Es findet ein Überkreuzen aller vorhandenen Statusinformationen statt. Somit steht jeder Komponente neben der lokalen Sicht auf eine zu überwachende Komponente (Server, Verbindung) auch die aktuelle, lokale Sicht aller anderen Komponenten auf diese Komponente zur Verfügung, die ebenfalls mit der betreffenden Komponente in Verbindung stehen.

Während zur Ausfallüberwachung einerseits Zählerstände inkrementiert werden, wenn Lebenszeichentelegramme ausbleiben, werden andererseits Grenzwerte oder Bedingungen benötigt, ab deren Überschreitung oder Erfüllung entsprechende Warn- oder Störungsmeldungen generiert werden. Hierbei können mehrere Stufen festgelegt werden. Das Zeitintervall für das Senden der Lebenszeichen und die Timeouts, die bei fehlenden Lebenszeichen zum Erhöhen der Fehlerzähler führen, werden erfindungsgemäß systemspezifisch konfiguriert.

Somit umfasst die Erfindung ferner die Definition verschiedenster Grenzwerte, die zu einer schnellen und sicheren Ausfallerkennung führen:

### StatusValidLimit:

Die erweiterten oder "entfernten" Fehlerzähler werden im Verfahren für die Ausfallerkennung nur dann berücksichtigt, wenn zumindest ein lokaler Fehlerzähler für den zugehörigen Server "LS-X" einen vorgegebenen Wert - wie beispielsweise den Timeout-Grenzwert - nicht überschreitet und damit sichergestellt ist, dass die Statusinformation zumindest über eine Kommunikationsverbindung vom entsprechenden Server empfangen werden konnte und damit aktuell ist. Dieses so genannte **StatusValidLimit** ist somit ein Grenzwert, der kennzeichnet, ab welchem Stand des lokalen Fehlerzählers für eine Komponente, die zugehörigen Fehlerzähler noch als gültig betrachtet werden. Das "StatusValidLimit" für eine Komponente wird vom Überwachungsprogramm nur ausgewertet, wenn für diese Komponente noch kein Timeout erreicht wurde.

Das **FastFailureDetectionLimit** ist immer dann erreicht, wenn der eigene, lokale Fehlerzähler einer Komponente dieses vorgegebene Limit für eine bestimmte Kommunikationsverbindung erreicht hat. Nach Ablauf der vordefinierten Zeitspanne des FastFailureDetectionLimits (beispielsweise 2 Zeiteinheiten) wird eine Komponente (oder Kommunikationsverbindung) als fehlerhaft gemeldet.

Das **RemoteFastFailureDetectionLimit** spezifiziert, ab welchem Stand eines erweiterten Zählers, die zugehörige Verbindung als gestört angesehen wird. Der Grenzwert des RemoteFastFailureDetectionLimits kann jedoch grundsätzlich auch mit demselben Wert konfiguriert werden wie der Grenzwert des FastFailureDetectionLimits.

Der Grenzwert des **LocalFailureDetectionLimits** kommt immer dann zum Tragen, wenn bei einem lokalen Ausfallzähler überhaupt keine Lebenszeichen mehr empfangen werden. Die zugehörige lokale Schnittstelle wird nach einer vorgegebenen Zeitspanne ebenfalls als fehlerhaft gemeldet. Hierbei werden höhere Timeouts verwendet. Das "LocalFailureDetectionLimit" als lokale Fehlererkennung entspricht der Vorgehensweise aktueller Verfahren ("Stand der Technik") und kommt zwangsläufig auch immer dann zur Anwendung, wenn ein System nur aus zwei Komponenten besteht.

Um ein unnötiges, initiales Inkrementieren eines Fehlerzählers (von 0 auf 1) zu vermeiden, bspw. aufgrund von tolerierbaren Verzögerungen im Netzwerk, kann initial (Lokaler Fehlerzähler ist 0) ein höherer Timeout verwendet werden. Bewährt hat sich hierbei auch die Vorgehensweise, den initialen Timeout auf den zweifachen Wert des Sendeintervalls zu setzen und beim Erreichen des Timeouts den Fehlerzähler gleich auf 2 zu setzen. Bei einem Fehlerzähler > 0 wird dann anschließend der einfache Sendezyklus als Timeout verwendet und der Zähler um den Wert 1 inkrementiert. Diese Vorgehensweise führt dazu, dass die Fehlerzähler im voll funktionstüchtigen System nicht verändert werden, da kurze und damit tolerierbare Verzögerungen beim Empfang der Lebenszeichen ausgefiltert werden.

Bei Bedarf können noch weitere Grenzwerte spezifiziert werden, um beim Erreichen der zugehörigen Werte auf Verzögerungen (**"LocalDelayDetectionLimit"**) hinzuweisen. Eine Verzögerung wird in diesem Sinne noch nicht als Ausfall betrachtet, sondern definiert als Warnung eine Vorstufe für einen etwaigen, nachfolgenden Ausfall.

Derartige Warnungen können ferner dafür genutzt werden, um in einer definierten Systemumgebung die spezifischen Werte für die im Verfahren verwendeten Zählerlimits und Zeitintervalle optimal festzulegen. So kann bspw. statistisch ermittelt werden, in wie vielen Fällen bei einer "Delay-Warnung" nachträglich auch ein Ausfall erkannt worden ist oder nicht. Auf Basis dieser Information kann die Einstellung der Grenzwerte dann adaptiert bzw. validiert werden.

Hieraus ergibt sich, dass die einzelnen Grenzwerte folgende Bedingung erfüllen:
"LocalDelayDetectionLimit" < "FastFailureDetectionLimit" < "LocalFailureDetectionLimit"

Der Komplettausfall einer Komponente kann aufgrund der zusätzlich vorhandenen Statusinformationen (= Zählerstände, Zählerwerte) mit höherer Sicherheit festgestellt werden, insbesondere dann, wenn die anderen Komponenten diese auch als gestört betrachten.

Diese zusätzliche Sicherheit ermöglicht dann insbesondere auch die Herabsetzung der Timeouts (Grenzwerte für die Ausfallzähler) für die Fehlererkennung auf das "FastFailureDetectionLimit", welches die "frühste" Fehlererkennung gewährleistet. Das erfindungsgemäße Verfahren prüft in diesem Fall (also beim Erreichen des Grenzwertes des "FastFailureDetectionLimits") zur weiteren Absicherung periodisch, ob folgende Bedingung für eine Kommunikationsverbindung erfüllt ist:
*Wenn der lokale Fehlerzähler das FastFailureDetectionLimit für eine bestimmte Kommunikationsverbindung zu einem Server X erreicht hat (LS oder LS-X >*= *FastFailureDetectionLimit)*
   UND
   *keine andere Komponente Y die betreffende Kommunikationsverbindung zu diesem Server X als fehlerfrei betrachtet (kein ES-Y-X < RemoteFastFailureDetectionLimit und LS-Y < StatusValidLimit)*
   UND
   *mindestens eine weitere Komponente Y die betreffende Kommunikationsverbindung zu diesem Server X ebenfalls aktuell als gestört betrachtet,*
   *(mindestens ein ES-Y-X >*= *RemoteFastFailureDetectionLimit und LS-Y < StatusValidLimit für eine Kommunikationsschnittstelle) wenn alle drei Bedingungen erfüllt sind, dann wird die entsprechende Verbindung als fehlerhaft betrachtet und gemeldet.*

In der Fehlerauswertung wird demnach jeweils die Sicht aller anderen Komponenten bezüglich der zu prüfenden Komponente ausgewertet. Die lokale Sicht der zu prüfenden Komponente wird hierbei aktuell nicht in Betracht gezogen, insbesondere da man nicht davon ausgeht, dass eine Kommunikationsverbindung nur in eine Richtung gestört ist. Für ein System, in dem eine unidirektionale Kommunikationsstörung auftreten kann und diese Art von Störung auch noch spezifisch behandelt werden muss, könnte das Verfahren derart erweitert werden, dass auf Basis der vorhandenen Statusinformationen auch diese differenzierte Fehlererkennung möglich wäre. In diesem Fall würden dann auch die Status der zu prüfenden Komponente in die Fehlererkennung einfließen.

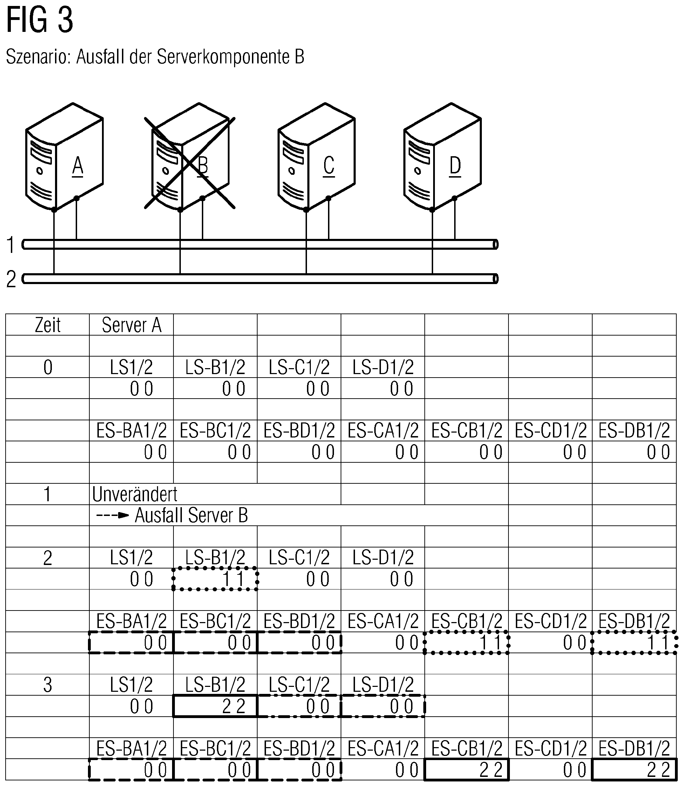

In den folgenden Figuren 3 bis 6 sind Ausführungsformen der erfindungsgemäßen Ausfallerkennung dargestellt, bei denen in Tabellenform jeweils eine Auswahl an Zählerständen zu bestimmten Zeitpunkten für unterschiedliche Szenarien gezeigt ist. Für alle Ausführungsformen sind die zu den einzelnen Kommunikationsschnittstellen zugehörigen Zählerstände aus der Sicht des Servers A dargestellt.

Die in Fig. 3 dargestellte Ausführungsvariante der Ausfallerkennung zeigt ein Szenario, bei dem Server B zu einem Zeitpunkt t = 1 ausfällt.

Zum Zeitpunkt t = 0 (Anfangszeitpunkt) betragen demnach die Stände des lokalen Fehlerzählers des Servers A für die Kommunikationsschnittstellen 1 und 2 null (LS1/2 = 0). Ebenso betragen die Zählerstände des lokalen Fehlerzählers, die immer nur dann erhöht werden, wenn von einer bestimmten anderen Komponente (also hier die Server B, C und D) kein Lebenszeichentelegramm erhalten wurde, für jede Kommunikationsschnittstelle (hier die Verbindungen 1 und 2) null: LS-B1 = LS-B2 = LS-C1 = LS-C2 = LS-D1 = LS-D2 = 0.

Die Zählerstände für die von Server A erweiterten Fehlerzähler betragen ebenfalls null:
ES-BA1/2 = ES-BC1/2 = ES-BD1/2 = 0 (Sicht des Servers B auf die anderen Komponenten über Verbindung 1 oder 2)
ES-CA1/2 = ES-CB1/2 = ES-CD1/2 = 0 (Sicht des Servers C auf die anderen Komponenten über Verbindung 1 oder 2)
ES-DA1/2 = ES-DB1/2 = ES-DC1/2 = 0 (Sicht des Servers D auf die anderen Komponenten über Verbindung 1 oder 2)

Alle bisher genannten Zählerstände bleiben auch nach Ablauf einer Zeiteinheit unverändert. Zum Zeitpunkt t = 1 fällt Server B aus.

Zum Zeitpunkt t = 2 werden demzufolge der Zählerstand des lokalen Fehlerzählers für Server B (lokale Sicht von Server A auf Server B) und die Zählerstände der erweiterten Fehlerzähler mit Sicht auf Server B erhöht. Da hier der Server B ausgefallen ist, sind nicht die Kommunikationsschnittstellen 1 und 2 betroffen und bleiben erhalten (LS1 = LS2 = 0).
Es gilt nun demnach:
- Erhöhung des lokalen Zählers von Server A mit Sicht auf Server B für beide Kommunikationsschnittstellen 1 und 2 auf eins:
   LS-B1 = LS-B2 = 1,
   da zu diesem Zeitpunkt kein Lebenszeichen vom Server B eingegangen ist und
   ES-CB1 = ES-CB2 = 1
   ES-DB1 = ES-DB2 = 1,
   da weder bei C, noch bei D auf den Kommunikationsschnittstellen 1 und 2 ein Lebenszeichendiagramm von Server B eingegangen ist.
Die Fehlerzähler von Server B sind durch den Ausfall von Server B ebenso ausgefallen, sind daher deaktiviert und werden nicht mehr aktualisiert. Demnach bleiben die Zählerstände der erweiterten Zähler mit Sicht auf B (ES-BA1 = ES-BA2 = ES-BC1 = ES-BC2 und ES-BD1 = ES-BD2 = 0) für alle zukünftigen Zeiteinheiten null.

Die um 1 erhöhten Fehlerzähler haben in diesem Ausführungsbeispiel jedoch noch kein Limit erreicht, da für die Ausfallerkennung vorab beispielhaft folgende Grenzwerte definiert wurden:
FastFailureDetectionLimit = 2
RemoteFastFailureDetectionLimit = 2
LocalFailureDetectionLimit = 4
StatusValidLimit = 1

Unter Berücksichtigung der systemspezifisch festgelegten Grenzwerte bedeutet dies für die geschilderte Ausführungsvariante der Fig. 3 für den Zeitpunkt t = 3, also zwei Zeiteinheiten nach Ausfall des Servers B:
Die lokalen Fehlerzählerstände LS-B1 für Verbindung 1 und LS-B2 für Verbindung 2 werden um 1 auf 2 inkrementiert.

Die erweiterten Fehlerzählerstände ES-CB1/2 und ES-DB1/2 werden ebenfalls um 1 auf 2 erhöht, da weder bei C, noch bei D auf den Kommunikationsschnittstellen 1 und 2 ein Lebenszeichendiagramm von Server B eingegangen ist.

Damit ist das FastFailureDetectionLimit für die Kommunikationsverbindungen 1 und 2 zu dem Server B erreicht, da die lokalen Zähler LS-B1 und LS-B2 die vordefinierten Werte 2 erreicht haben. Gleichzeitig ist auch die zweite Bedingung, dass keine andere Komponente die betreffenden Kommunikationsverbindung zum Server B als fehlerfrei erkennt, erfüllt, da die erweiterten Zählerstände von Server C und D ja ebenfalls erhöht sind: ES-CB1 = ES-CB2 = 2 und ES-DB1 = ES-DB2 = 2, und damit eben **nicht** das RemoteFastFailureDetectionLimit von 2 unterschreiten.

Für die Kommunikationsverbindungen 1 und 2 gilt also **nicht:** ES-CB1/2 < RemoteFastFailureDetectionLimit (hier = 2), aber LS-C1/2 < StatusValidLimit (hier = 1), d.h. der Zählerstand des lokalen Zählers von Zähler C der beiden Kommunikationsschnittstellen 1 und 2 ist gültig, was über das StatusValidLimit abgefragt wird. Das RemoteFastFailureDetectionLimit des erweiterten Zählers von Zähler C über die Verbindungen 1 und 2 ist jedoch erreicht, also nicht fehlerfrei.
Das Gleiche gilt für Server D.

Ferner ist auch die dritte Bedingung für das FastFailureDetectionLimit erfüllt, nämlich dass mindestens eine weitere Komponente die betreffende Kommunikationsverbindung zu diesem Server ebenfalls aktuell als gestört betrachtet, wobei jeweils valide Zählerstände der lokalen Zähler C und D vorliegen müssen (d.h. LS-C1/2 < StatusValidLimit und : LS-D1/2 < StatusValidLimit):
ES-CB1/2 >= RemoteFastFailureDetectionLimit (hier = 2) UND
LS-C1/2 (hier = 0) < StatusValidLimit (hier = 1) ODER
ES-DB1/2 >= RemoteFastFailureDetectionLimit (hier = 2) UND
LS-D1/2 (hier = 0) < StatusValidLimit (hier = 1)

Als Gesamtergebnis der Auswertung der Ausfallzähler bei Server A zum Zeitpunkt t = 3, meldet Server A dem Überwachungsprogramm, dass Server B sowohl auf Kommunikationsverbindung 1, als auch auf Kommunikationsverbindung 2 ausgefallen ist.

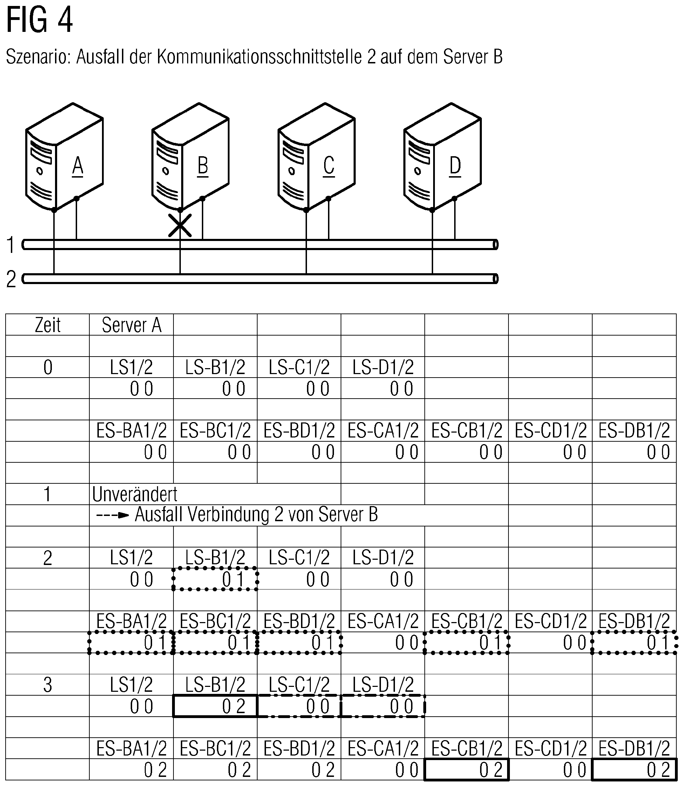

Die in Fig. 4 dargestellte Ausführungsvariante der Ausfallerkennung zeigt ein Szenario, bei dem die Kommunikationsschnittstelle 2 auf Server B zu einem Zeitpunkt t = 1 ausfällt. Auch in dieser Ausführungsvariante wird die Situation von Server A aus betrachtet.

Der Ausfall der Kommunikationsschnittstelle 2 auf Server B führt dazu, dass der lokale Zählerstand für die Kommunikationsschnittstelle 2 von Server B zum Zeitpunkt t = 2 auf 1 erhöht wird: LS-B2 = 1. Gleichzeitig wird den erweiterten Zählern auf Server A die Sicht aller anderen Server (B, C und D) "gemeldet", indem ihnen die lokalen Zählerstände der Zähler der Server B, C und D im Hinblick auf die Kommunikationsschnittstelle 2 des Servers B zugewiesen werden. Dabei sind nur die Zähler inkrementiert, die kein Telegramm von Server B über die Kommunikationsschnittstelle 2 empfangen haben. Für die erweiterten Zählerstände bedeutet dies:
ES-BA2 = ES-BC2 = ES-BD2 = 1 und ES-CB2 = ES-DB2 = 1
Alle anderen erweiterten Zählerstände des Servers A bleiben mit dem Wert 0 belegt.

Zum Zeitpunkt t = 3, also nach Ablauf einer weiteren Zeiteinheit, erreicht der lokale Zählerstand für die Kommunikationsschnittstelle 2 von Server B das vorab im System festgelegte (Grenzwerte wie in der vorherigen Ausführungsvariante) FastFailureDetectionLimit von 2: LS-B2 = 2. Die lokalen Zählerstände für die Kommunikationsschnittstelle 2 für Zähler C und D bleiben bei 0 (LS-C2 = LS-D2 = 0), allerdings erhöhen sich die erweiterten Zähler für die Kommunikationsschnittstelle 2 auf Server A:
ES-BA2 = ES-BC2 = ES-BD2 = 2 und ES-CB2 = ES-DB2 = 2

Das Überwachungsprogramm überprüft nun ebenfalls, ob alle Bedingungen für das Erreichen des FastFailureDetectionLimits erfüllt sind:
Die erste Bedingung LS-B2 >= FastFailureDetectionLimit ist erfüllt, da LS-B2 = 2.
Die zweite Bedingung ist erfüllt, wenn keine andere Komponente die betreffende Kommunikationsverbindung 2 zu Server B als fehlerfrei betrachtet:
d.h. ES-CB2 < RemoteFastFailureDetectionLimit und LS-C1/2 < 1 und ES-DB2 < RemoteFastFailureDetectionLimit und LS-D1/2 < 1 M.a.W.: Server A empfängt von den Servern C und D weiterhin Lebenszeichentelegramm über die Kommunikationsschnittstellen 1 und 2, aber das RemoteFastFailureDetectionLimit der lokalen Zähler auf den Servern C und D mit Hinblick auf die Kommunikationsschnittstelle 2 von Server B (= ES-CB2 und ES-DB2) ist bereits überschritten.
Die dritte Bedingung prüft nun nochmals ab, ob das RemoteFastFailureDetectionLimit von mindestens einem der lokalen Zähler auf den Servern C und D mit Hinblick auf die Kommunikationsschnittstelle 2 von Server B (= ES-CB2 und ES-DB2 = 2) erreicht oder überschritten wurde, bei gleichzeitiger Überprüfung gültiger Verbindungen zu den Servern C und D:
ES-CB2 >= RemoteFastFailureDetectionLimit UND LS-C1/2 < StatusValidLimit oder
ES-DB2 >= RemoteFastFailureDetectionLimit UND LS-D1/2 < StatusValidLimit

Als Gesamtergebnis der Auswertung der Ausfallzähler bei Server A zum Zeitpunkt t = 3, meldet Server A dem Überwachungsprogramm, dass Server B auf Kommunikationsverbindung 2 ausgefallen ist.

In diesem Szenario sind alle "entfernten" Zählerstände gültig, da die zur Verbindung 2 gehörenden Statusmeldungen oder Zählerstände eben auch über Verbindung 1 ausgetauscht werden.

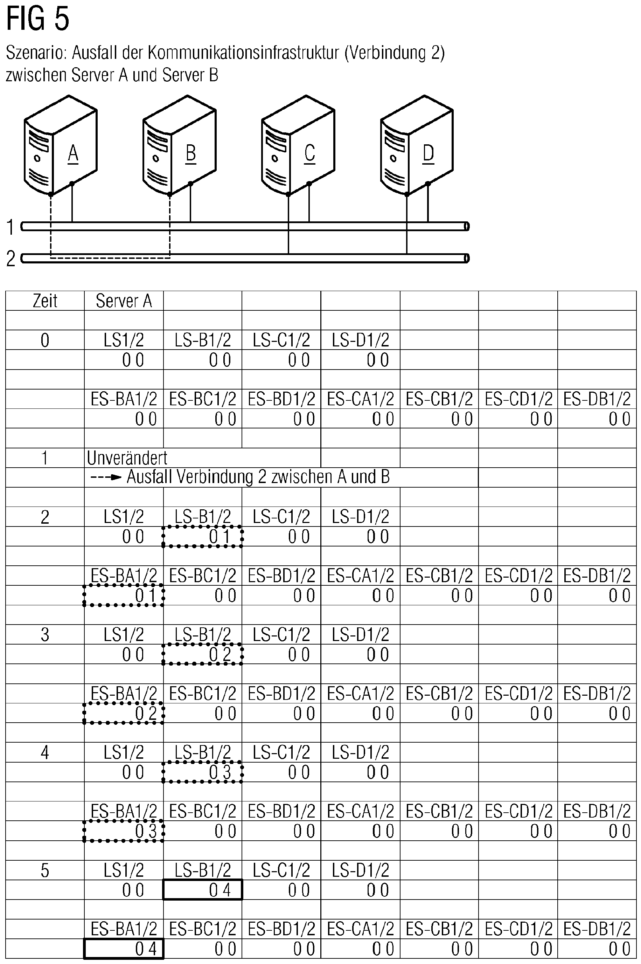

Die in Fig. 5 dargestellte Ausführungsvariante der Ausfallerkennung zeigt ein Szenario, bei dem die Verbindung 2 zwischen Server A und Server B zu einem Zeitpunkt t= 1 ausfällt. Auch in dieser Ausführungsvariante wird die Situation von Server A aus betrachtet.

Der Ausfall der Verbindung 2 zwischen Server A und Server B führt dazu, dass der lokale Zählerstand für die Kommunikationsschnittstelle 2 von Server B zum Zeitpunkt t = 2 auf 1 erhöht wird: LS-B2 = 1. Ferner wird auf Zähler A der Zählerstand des erweiterten Zählers mit Sicht auf Zähler B über die Kommunikationsschnittstelle 2 um 1 erhöht: ES-BA2 = 1.

Alle anderen Zählerstände werden nicht verändert und bleiben bei 0, da ja nur die Kommunikationsverbindung 2 zwischen Server 1 und 2 gestört ist. Über Verbindung 1 können weiterhin alle Kommunikationsteilnehmer kommunizieren und Lebenszeichentelegramme austauschen. So erhält Server A weiterhin über Verbindung 1 die Zählerstände aller erweiterten Zähler von Server C und D, aber auch die Zählerstände der erweiterten Zähler von Server B mit Sicht auf die Server C und D: ES-BC1/2 = ES-BD1/2 = 0. All diese Zähler werden nicht inkrementiert.

Zu den Zeitpunkten t = 3 und t = 4 werden weiterhin die Zählerstände derjenigen Zähler erhöht, die vom Ausfall der Kommunikationsverbindung 2 zwischen dem Server A und B betroffen sind: LS-B2 und ES-BA2. Diese erreichen zum Zeitpunkt t = 3 den Wert 2. Nun überprüft das Überwachungsprogamm, ob die Bedingungen für das FastFailureDetectionLimit erfüllt sind:
Die erste Bedingung LS-B2 >= FastFailureDetectionLimit ist erfüllt, da LS-B2 = 2.

Die zweite Bedingung ist erfüllt, wenn keine andere Komponente die betreffende Kommunikationsverbindung 2 zwischen Server A und B als fehlerfrei betrachtet. Letzteres ist allerdings nicht erfüllt, da ES-CB2 < RemoteFastFailureDetectionLimit und ES-DB2 < RemoteFastFailureDetectionLimit. M.a.W.: Server A empfängt von den Servern C und D weiterhin Lebenszeichentelegramm über die Kommunikationsschnittstelle 1, aber das RemoteFastFailureDetectionLimit der lokalen Zähler auf den Servern C und D mit Hinblick auf die Kommunikationsschnittstelle 2 von Server B (= ES-CB2 und ES-DB2) wird nicht überschritten, da die lokalen Zähler auf den Servern C und D weiterhin Lebenszeichentelegramme von Server B über Verbindung 1 erhalten können. Da hier eine isolierte Störung der Kommunikationsverbindung zwischen zwei Komponenten durch die anderen Komponenten nicht erkannt werden kann, greift hier nicht das "FastFailureDetectionLimit". In diesem Szenario können nur die lokalen Fehlerzähler zur Ausfallerkennung herangezogen werden, verbunden mit den hierfür erforderlichen höheren Grenzwerten.

Zum Zeitpunkt t = 5 erreichen die Zählerstände LS-B2 und ES-BA2 den Wert 4 (LS-B2 = ES-BA2 = 4), der dem zuvor im System eingestellten LocalFailureDetectionLimit entspricht. Das Überwachungsprogramm meldet nun den erkannten lokalen Fehler: B auf Kommunikationsverbindung 2 ausgefallen. Die Server C und D können in dieser Ausführungsvariante den Fehler nicht erkennen. Die Vorgehensweise entspricht hier daher den bereits bekannten lokalen Erkennungsmechanismen.

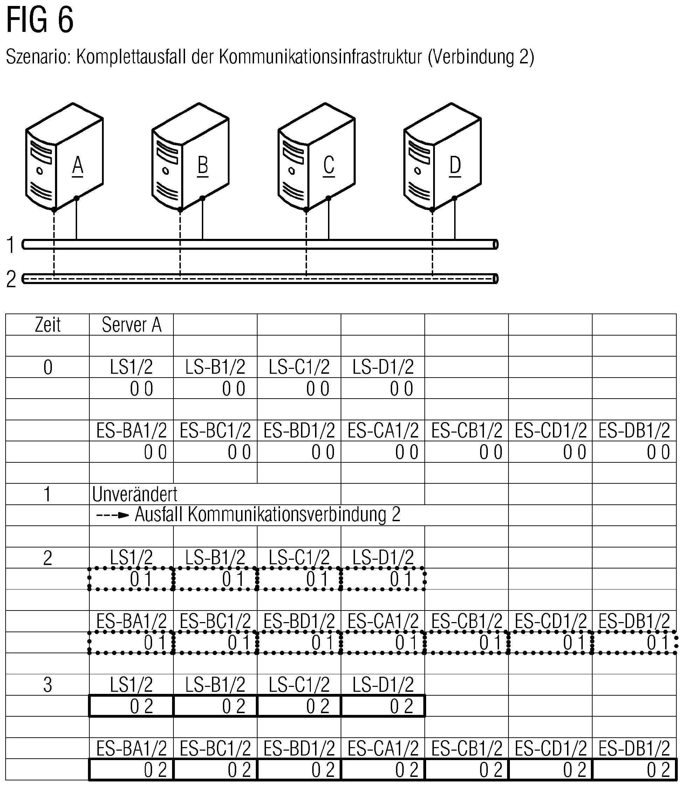

Die in Fig. 6 dargestellte Ausführungsvariante der Ausfallerkennung zeigt ein Szenario, bei dem die Kommunikationsverbindung 2 zwischen allen Servern zu einem Zeitpunkt t= 1 komplett ausfällt. Auch in dieser Ausführungsvariante wird die Situation von Server A aus betrachtet.

Der Ausfall der Kommunikationsverbindung 2 führt dazu, dass auf den Servern A bis D alle Zählerstände der lokalen Zähler, die die Kommunikationsschnittstelle der Server mit der Verbindung 2 überwachen, um 1 inkrementiert werden:
LS2 = LS-B2 = LS-C2 = LS-D2 = 1

Dementsprechend werden auch die Zählerstände für die von Server A erweiterten Zähler aller Server bezogen auf ihre Kommunikationsschnittstelle 2 auf 1 erhöht:
ES-BA2 = ES-BC2 = ES-BD2 = 1 (Sicht des Servers B auf die anderen Komponenten über Verbindung 2)
ES-CA2 = ES-CB2 = ES-CD2 = 1 (Sicht des Servers C auf die anderen Komponenten über Verbindung 2)
ES-DA2 = ES-DB2 = ES-DC2 = 0 (Sicht des Servers D auf die anderen Komponenten über Verbindung 2)

Die Zählerstände für die von Server A erweiterten Zähler aller Server bezogen auf ihre Kommunikationsschnittstelle 1 hingegen bleiben null, da sie weiterhin Lebenszeichentelegramme untereinander austauschen können. Der Status von Verbindung 2 wird demnach auch über Verbindung 1 transferiert und an alle Kommunikationsteilnehmer verteilt.

Zum Zeitpunkt t = 3 erhöhen sich in einem nächsten Schritt alle Zählerstände der lokalen und demnach auch der erweiterten Zähler, welche die Kommunikationsschnittstellen zu Verbindung 2 überwachen, um 1. Ferner wird das Überwachungsprogamm überprüfen, ob die Bedingungen für ein FastFailureDetectionLimit erfüllt sind:
Die erste Bedingung ist erfüllt, da die lokalen Fehlerzähler aller anderen Server B, C, und D bezogen auf die Kommunikationsschnittstelle 2 den Wert 2 für das FastFailureDetectionLimit erreicht haben:
   LS-B2 = LS-C2 = LS-D2 >= 2 = FastFailureDetectionLimit.
Die zweite Bedingung ist erfüllt, wenn keine andere Komponente die betreffende Kommunikationsverbindung 2 als fehlerfrei betrachtet:
   d.h. z. B. ES-BA2 < RemoteFastFailureDetectionLimit und LS-B2 < 1 ist nicht erfüllt, was wiederum bedeutet, dass bezogen auf Server B und dessen Kommunikationsschnittstelle 2 alle Zählerstände, die einen fehlerfreien Betrieb kennzeichnen, überschritten sind. Das Gleiche gilt mir Hinblick auf Server C und D mit deren Kommunikationsschnittstellen 2.

Die dritte Bedingung prüft nun nochmals ab, ob das RemoteFastFailureDetectionLimit von mindestens einem der lokalen Zähler auf den Servern B, C und D mit Hinblick auf die Kommunikationsschnittstelle 2 erreicht oder überschritten wurde, bei gleichzeitiger Überprüfung gültiger Verbindungen zu den Servern B, C und D:
ES-BA2 >= RemoteFastFailureDetectionLimit UND LS-B1 < StatusValidLimit
ES-BC2 >= RemoteFastFailureDetectionLimit UND LS-C1 < StatusValidLimit
ES-BD2 >= RemoteFastFailureDetectionLimit UND LS-D1 < StatusValidLimit
Das Gleich gilt für die erweiterten Zähler von C und D.

Folglich gilt für die Zählerstände der erweiterten Fehlerzähler aller anderen Server für B,C,D über die Kommunikationsschnittstelle 2, dass diese größer gleich dem RemoteFastFailureDetectionLimit sind UND dass, LS-x1/2 < StatusValidLimit mit x = B, C, oder D.

Als Gesamtergebnis der Auswertung der Ausfallzähler bei Server A zum Zeitpunkt t = 3, meldet Server A dem Überwachungsprogramm, dass die Kommunikationsverbindung 2 ausgefallen ist.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Verfahren zum Betrieb eines Kommunikationssystems (10) für verteilte Anwendungen, mit einer Anzahl kommunikativ verbundener Komponenten (A, B, C, D),
wobei jede Kommunikationsverbindung zwischen den Komponenten (A, B, C, D) durch Lebenszeichentelegramme, die in periodischen, definierten Zeitintervallen zwischen den Komponenten (A, B, C, D) verteilt werden, überwacht wird, wobei die Lebenszeichentelegramme in jeder Komponente (A, B, C, D) ausgewertet werden, indem pro Komponente (A) die Statusinformationen von lokalen Fehlerzählern der eigenen Kommunikationsschnittstellen (LS) und der eigenen Kommunikationsschnittstellen zu allen anderen einzelnen Komponenten (LS-X) überprüft wird,
**dadurch gekennzeichnet,**
**dass** pro Komponente (A) zusätzlich erweiterte Fehlerzähler (ES-X-Y) bei der Überwachung berücksichtigt werden, indem die Statusinformationen der lokalen Fehlerzähler (LS-X) der Kommunikationsschnittstellen zu allen anderen einzelnen Komponenten (X) im Hinblick auf alle anderen Komponenten (Y) den erweiterten Fehlerzählern (ES-X-Y) zugewiesen, verteilt und überprüft werden.

2. Verfahren nach Anspruch 1,
**dadurch gekennzeichnet,**
**dass** beim Ausbleiben eines Lebenszeichentelegramms auf einer Kommunikationsschnittstelle die lokalen Fehlerzähler (LS, LS-X) der entsprechenden Kommunikationsschnittstelle pro Zeiteinheit inkrementiert werden und deren Statusinformationen im Kommunikationssystem verteilt, und den erweiterten Zählern (ES-X-Y) aller anderen Komponenten zugewiesen werden und
**dass** beim Überschreiten zumindest eines vordefinierten Grenzwerts der Statusinformation eines lokalen und/oder erweiterten Zählers eine Warnmeldung generiert wird und ein Ausfall einer Kommunikationsverbindung (1, 2) oder Komponente (A, B, C, D) angezeigt wird.

3. Verfahren nach Anspruch 1 oder 2,
**dadurch gekennzeichnet,**
**dass** eine Kommunikationsverbindung (1, 2) oder Komponente (A, B, C, D) als fehlerhaft angezeigt wird,
- wenn der lokale Fehlerzähler (LS, LS-X) einer ersten Komponente (X) einen vordefinierten Grenzwert für eine bestimmte Kommunikationsverbindung zu einer zweiten Komponente (Y) erreicht hat, UND
- wenn keine andere Komponente die betreffende Kommunikationsverbindung zu dieser zweiten Komponente (Y) als fehlerfrei betrachtet UND
- wenn mindestens eine weitere Komponente die betreffende Kommunikationsverbindung zu dieser zweiten Komponente (Y) ebenfalls aktuell als gestört betrachtet.

4. Verfahren nach Anspruch 1, 2 oder 3,
**dadurch gekennzeichnet,**
**dass** die erweiterten Fehlerzähler (ES-X-Y) in bereits bestehende Lebenszeichentelegramme eingebettet werden.

5. Kommunikationssystem für verteilte Anwendungen mit einer Anzahl kommunikativ verbundener Komponenten (A, B, C, D), aufweisend zumindest eine Überwachungseinheit, die dazu ausgelegt ist, jede Kommunikationsverbindung zwischen den Komponenten (A, B, C, D) durch Lebenszeichentelegramme, die in periodischen, definierten Zeitintervallen zwischen den Komponenten (A, B, C, D) verteilt werden, zu überwachen,
wobei jede Komponente über eine Auswerteeinheit verfügt, die dazu ausgelegt ist, die Lebenszeichentelegramme in jeder Komponente (A, B, C, D) auszuwerten, indem pro Komponente (A) die Statusinformationen von lokalen Fehlerzählern der eigenen Kommunikationsschnittstellen (LS) und der eigenen Kommunikationsschnittstellen zu allen anderen einzelnen Komponenten (LS-X) überprüft wird,
**dadurch gekennzeichnet,**
**dass** pro Komponente (A) die Auswerteeinheit zusätzlich erweiterte Fehlerzähler (ES-X-Y) bei der Auswertung berücksichtigt, indem die Statusinformationen der lokalen Fehlerzähler (LS-X) der Kommunikationsschnittstellen zu allen anderen einzelnen Komponenten (X) im Hinblick auf alle anderen Komponenten (Y) den erweiterten Fehlerzählern (ES-X-Y) zugewiesen werden, im Kommunikationssystem verteilt und in der Überwachungseinheit überprüft werden.

6. Kommunikationssystem nach Anspruch 5,
**dadurch gekennzeichnet,**
**dass** die Auswerteeinheit einer Komponente (A, B, C, D) ferner derart ausgelegt ist, dass beim Ausbleiben eines Lebenszeichentelegramms auf einer Kommunikationsschnittstelle die lokalen Fehlerzähler (LS, LS-X) der entsprechenden Kommunikationsschnittstelle pro Zeiteinheit inkrementiert werden und deren Statusinformationen im Kommunikationssystem verteilt, und den erweiterten Zählern (ES-X-Y) aller anderen Komponenten zugewiesen werden und
**dass** beim Überschreiten zumindest eines vordefinierten Grenzwerts der Statusinformation eines lokalen und/oder erweiterten Zählers eine Warnmeldung generiert wird und ein Ausfall einer Kommunikationsverbindung (1, 2) oder Komponente (A, B, C, D) angezeigt wird.

7. Kommunikationssystem nach Anspruch 5 oder 6,
**dadurch gekennzeichnet,**
**dass** die Auswerteeinheit einer Komponente (A, B, C, D) oder die Überwachungseinheit ferner dazu ausgelegt ist, ein Verfahren gemäß Anspruch 3 durchzuführen.

8. Kommunikationssystem nach einem der vorhergehenden Ansprüche,
**dadurch gekennzeichnet, dass** es zur Automatisierung von Prozessen eingesetzt wird.

9. Kommunikationsteilnehmer (A, B, C, D) zum Betrieb in einem Kommunikationssystem (10), der zum Verteilen von mindestens einem Lebenszeichentelegramm in periodischen, definierten Zeitintervallen an mindestens einen anderen Kommunikationsteilnehmer (A, B, C, D) vorgesehen und ausgebildet ist, **gekennzeichnet durch** eine Auswerteeinheit, welche dazu ausgebildet ist, das Verfahren gemäß einem der Ansprüche 1 bis 4 durchzuführen.
